Europäisches Patentamt

European Patent Office

Office européen des brevets

(19)

(11) Numéro de publication: **0 379 401**

**A1**

(12)

# DEMANDE DE BREVET EUROPEEN

(21) Numéro de dépôt: **90400086.6**

(51) Int. Cl.5: **F16L 19/08**

(22) Date de dépôt: **12.01.90**

(30) Priorité: **20.01.89 FR 8900679**

(43) Date de publication de la demande:
**25.07.90 Bulletin 90/30**

(84) Etats contractants désignés:
**DE ES GB IT**

(71) Demandeur: **LE JOINT FRANCAIS SNC**
**84, rue Salvador-Allende**
**F-95870 Bezons(FR)**

(72) Inventeur: **Voirol, Bernard**
**28, rue des Epinettes**
**F-95240 Cormeilles en Parisis(FR)**
Inventeur: **Blossier, Jean-Paul**
**9, rue des Lilas**
**F-53360 Ouclaines(FR)**

(74) Mandataire: **Orès, Bernard et al**
**Cabinet ORES 6, Avenue de Messine**
**F-75008 Paris(FR)**

(54) **Joint d'étanchéité pour dispositif d'assemblage de canalisations en métal ou en matière plastique.**

(57) Joint d'étanchéité pour dispositif d'assemblage de canalisations en métal ou en matière plastique du type comprenant un corps recevant le joint, une bague fendue de serrage d'une canalisation et un chapeau ou écrou propre à coopérer avec le corps.

Le joint (25) en matériau élastomère, notamment en matière caoutchoutique comme du caoutchouc-nitrile, du caoutchouc éthylènepropylène, du caoutchouc fluorocarboné, etc... est du type des joints circulaires à section oblongue dont la section droite est une courbe ovale s'inscrivant entre deux ellipses ayant pour grands axes $a_1$ et $a_2$ et pour petits axes $b_1$ et $b_2$, les ellipses étant coaxiales et les valeurs $a_1$, $a_2$, $b_1$, $b_2$ satisfaisant aux relations :

(I)     $\frac{a_1}{b_1} = 2{,}3$

(II)    $\frac{a_2}{b_2} = 1{,}3$

(III)   $\frac{a_2}{a_1} = 1{,}2$

Application : assemblage de canalisations, par exemple pour réseau de distribution d'eau.

FIG.2

EP 0 379 401 A1

# JOINT D'ETANCHEITE POUR DISPOSITIF D'ASSEMBLAGE DE CANALISATIONS EN METAL OU EN MATIERE PLASTIQUE

L'invention a pour objet un joint d'étanchéité pour dispositif d'assemblage de canalisations en métal ou en matière plastique du type comportant un corps recevant le joint, une bague fendue de serrage d'une des canalisations set un écrou ou chapeau propre à coopérer avec le corps.

On utilise couramment pour la réalisation de réseaux de distribution d'eau chaude et froide sanitaire, ou pour la réalisation de réseaux de chauffage, des canalisations en métal ou en matière plastique réunies par des raccords comportant un corps dont l'alésage est propre à recevoir une des canalisations a relier entre elles, l'autre canalisation coopérant avec un manchon que présente le corps qui, en outre, est muni à une de ses extrémités d'une couronne filetée. Sur cette dernière peut être vissé un écrou ou chapeau de blocage enfermant une bague fendue de serrage assurant l'amarrage d'une canalisation, par exemple un tube qui, lorsqu'il est en matière plastique, est généralement muni intérieurement et sur une courte longueur d'une douille de renfort. Le corps, le chapeau et la bague fendue de serrage sont habituellement réalisés en laiton et, aussi bien dans le cas de raccords que d'adaptateurs, un joint torique en élastomère est prévu pour l'étanchéité. Pour l'exécution de tels réseaux à l'aide de raccords de ce type on en démonte les différentes parties, on enfile l'écrou de serrage et la bague fendue sur le tube à monter, on met en place le joint torique à l'avant de la bague, on dispose, -dans le cas d'un tube en matière plastique-, la douille de renfort dans ledit tube, on enfonce ce dernier dans l'alésage du corps et on serre l'écrou à l'aide d'une clef. Outre le temps requis pour ces diverses opérations, une étanchéité satisfaisante n'est assurée qu'à la suite d'un serrage adéquat, lequel ne peut être obtenu qu'avec une longueur axiale de filet, et donc une longueur totale de l'écrou de serrage suffisamment importante.

Compte-tenu du grand nombre d'opérations de monta ges de tels raccords sur un chantier, d'une part, et du coût en matière première pour la fabrication des éléments du raccord, d'autre part, il est clair que toute diminution de l'un et/ou l'autre de ces facteurs est d'importance sur le plan économique et c'est pourquoi la Demanderesse s'est attelée à la recherche d'une solution au problème posé qui est celui de fournir un raccord, adaptateur ou autre dispositif d'assemblage permettant à la fois de réduire le temps de montage des tubes, canalisations ou autres organes à relier entre eux tout en étant d'un coût inférieur à celui des dispositifs connus.

Ce problème est résolu, selon l'invention, par le fait que le raccord, adaptateur ou autre dispositif d'assemblage comprend non plus un joint torique, comme dans les dispositifs connus, mais un joint spécifique du type des joints circulaires à section oblongue, -désigné dans ce qui suit sous le terme de "joint elliptique" bien que sa section droite ne soit pas nécessairement une ellipse au sens mathématique du terme-.

Le raccord, adaptateur ou autre dispositif d'assemblage peut alors être livré aux utilisateurs en étant assemblé de sorte que le montage s'effectue très simplement sans avoir à en défaire les parties constitutives.

Dans une réalisation de l'invention, le joint d'étanchéité en matière caoutchoutique, comme du caoutchouc-nitrile, un caoutchouc éthylène-propylène, un caoutchouc fluoro-carboné, etc... est un joint circulaire elliptique dont la section droite est une courbe ovale s'inscrivant entre deux ellipses ayant pour grands axes $a_1$ et $a_2$ et pour petits axes $b_1$ et $b_2$, les ellipses étant coaxiales et les valeurs $a_1$, $a_2$, $b_1$ et $b_2$ satisfaisant aux relations :

(I)     $\frac{a_1}{b_1} = 2,3$

(II)    $\frac{a_2}{b_2} = 1,3$

(III)   $\frac{a_2}{a_1} = 1,2$

Dans une forme de réalisation avantageuse, le joint circulaire elliptique est symétrique par rapport à un axe s'étendant suivant la direction de la corde de plus petite dimension de la courbe ovale définissant sa section droite avec pour conséquence qu'est évitée toute possibilité d'erreur de sens lors du montage du joint dans la gorge destinée à le recevoir.

Dans une forme de réalisation préférée, le joint circulaire elliptique est à deux axes de symétrie orthogonaux dirigés parallèlement aux cordes de plus grande et de plus petite dimensions, respectivement, de la courbe ovale définissant la section droite du joint, une telle réalisation présentant complémentairement a l'avantage indiqué ci-dessus celui d'une plus grande facilité de fabrication.

Quelle que soit sa forme, un joint selon l'invention est mis en place dans la gorge du corps de raccord, adaptateur ou autre dispositif d'assemblage préalablement à toute opération de montage et le tube destiné à coopérer avec l'alésage du corps , -éventuellement muni intérieurement de sa douille de renfort-, est alors rapporté par simple enfoncement dans le corps enfermant la bague de serrage, après quoi l'écrou ou chapeau de serrage est vissé à l'aide d'une clef.

La forme spécifique du joint permet de réduire les efforts de montage et supprime les risques de destruction par pincement à l'introduction du tube dans le corps du raccord, adaptateur ou autre dispositif d'assemblage, en raison du faible angle d'attaque du bord du tube sur le joint. En outre, une telle forme fournit un dégagement suffisant qui évite le pincement du joint par la bague de serrage sur le corps du raccord, adaptateur ou autre dispositif lorsque l'on serre l'écrou.

Il en résulte un gain de temps important au montage, d'une part, et, d'autre part, la possibilité de réduire la longueur du filetage de l'écrou de serrage (et par suite celle de l'écrou et donc son coût) étant donné que le tube est enfoncé dans le raccord tout équipé, avec le joint monté dans sa gorge, le serrage de l'écrou ne s'effectuant que sur une courte partie de filetage correspondant au serrage du joint pour assurer l'étanchéité, donc avec une moindre longueur de filetage.

L'invention sera bien comprise par la description qui suit, faite à titre d'exemple et en référence au dessin annexé dans lequel :

- la figure 1 est une vue en coupe longitudinale d'un raccord selon l'invention dans sa condition précédant le montage ;

- la figure 2 est une vue analogue à celle de la figure 1 mais dans la condition de montage ;

- les figures 3 sont des vues à plus grande échelle de la section droite de joints selon l'invention ;

- la figure 4 est une vue à encore plus grande échelle illustrant les positions relatives d'un joint selon l'invention, d'un corps et d'un tube avant montage de ce dernier.

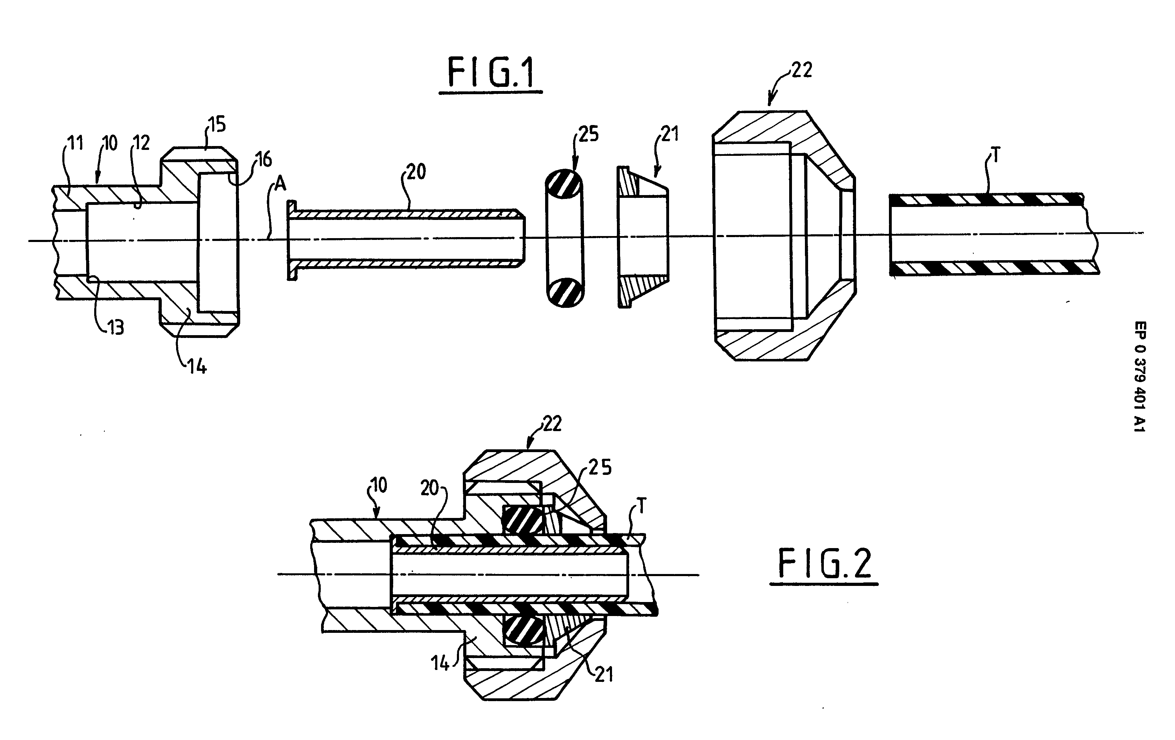

Un dispositif d'assemblage de canalisations en métal ou en matière plastique, par exemple un raccord propre à être utilisé pour la réalisation de réseaux de distribution d'eau chaude ou d'eau froide sanitaire, ou pour la réalisation de réseaux de chauffage, est montré sur les figures 1 et 2. Il comprend un corps 10, constitué par un manchon cylindrique 11 en laiton ou matériau analogue, foré suivant un alésage 12 qui ménage un épaulement 13 à une de ses extrémités et dont l'autre présente une gorge interne 16 de plus grand diamètre que l'alésage 12 dans une couronne 14 à filetage externe 15. L'alésage 12 est prévu pour recevoir un tube ou canalisation T, par exemple en matière plastique, que le raccord doit assembler avec un autre tube ou canalisation, non représenté, ou un robinet ou un accessoire de circuit de fluide a réaliser. A l'intérieur du tube T peut être logée une douille de renfort 20 et avec l'extérieur du tube est propre à coopérer une bague fendue de serrage 21 qui assure l'amarrage du tube T lorsqu'un chapeau ou écrou de serrage 22 est amené à coopérer avec le filetage 15 du corps 10.

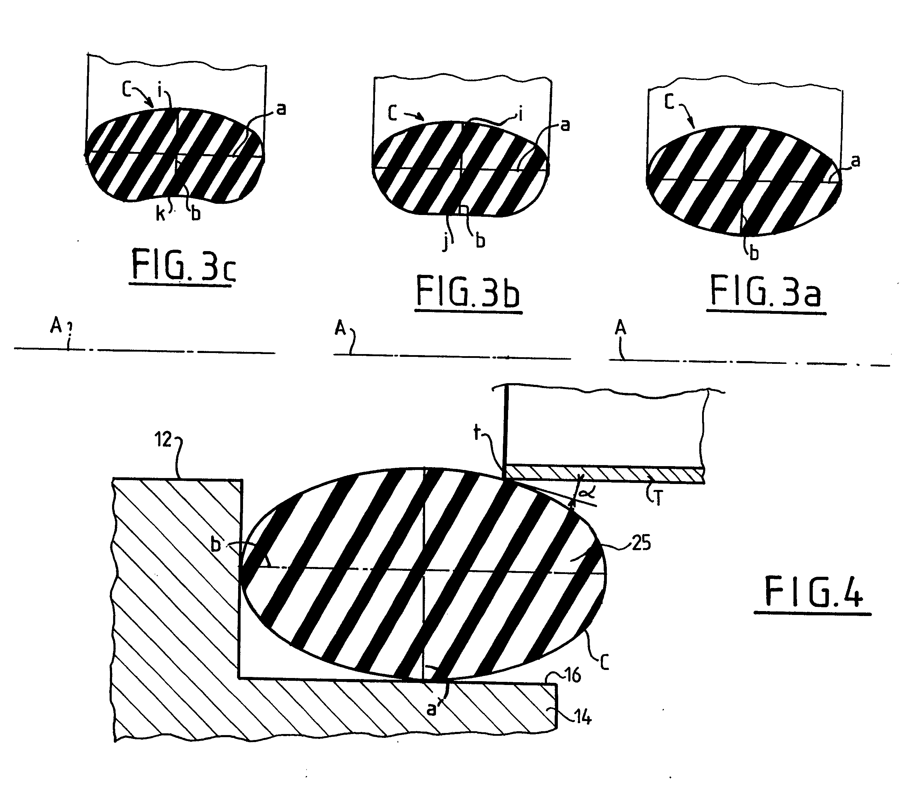

Conformément à l'invention, le dispositif d'assemblage qui vient d'être décrit est équipé d'un joint d'étanchéité 25 en élastomère, par exemple du caoutchouc nitrile, du caoutchouc éthylène-propylène, du caoutchouc fluorocarboné, etc... conformé suivant un joint du type circulaire à section oblongue, quelque peu elliptique, bien que la courbe limitant la section droite du joint ne soit pas nécessairement une ellipse au sens mathématique du terme. De façon plus précise, la section droite du joint selon l'invention est une courbe ovale C qui, comme montrée sur la figure 3a, a une corde de plus grande longueur, a, dirigée parallèlement à l'axe A de la gorge 16 du corps 10 où le joint est logé et une corde b de plus courte longueur, la courbe C étant ici symétrique par rapport à deux axes parallèles aux cordes et a et b.

Dans la forme de réalisation illustrée sur la figure 3b, le contour de la courbe ovale C limitant la section droite du joint n'est pas symétrique par rapport à un axe parallèle à la corde a de plus grande longueur, la courbe C présentant sur sa partie formant la surface interne du joint un bombement i plus marqué que celui i, de la partie en regard de sa surface externe.

Dans la réalisation selon la figure 3c, la courbe ovale C n'est pas non plus symétrique par rapport à un axe parallèle à la corde de plus grande longueur a, mais présente alors en regard de la partie bombée i destinée à former la surface interne du joint une partie externe k concave, la section droite ayant ainsi quelque peu une forme de "haricot".

Quelle que soit la réalisation du joint circulaire à section oblongue, l'invention prévoit que la courbe C qui définit sa section droite s'inscrive entre deux ellipses coaxiales, de grands axes $a_1$ et $a_2$ et de petits axes $b_1$ et $b_2$, $a_1$, $a_2$, $b_1$ et $b_2$ satisfaisant aux relations :

(I)     $\frac{a_1}{b_1} = 2,3$

(II)    $\frac{a_2}{b_2} = 1,3$

(III)   $\frac{a_2}{a_1} = 1,2$

Une telle structure du joint 25 permet de le mettre en place dans la gorge 16 préalablement à toute opération de montage du tube T, la condition étant alors celle montrée à grande échelle sur la figure 4. Lorsque le tube T, éventuellement muni du manchon de renfort 20, est introduit dans le corps 10, l'angle d'attaque α du bord t du tube T, -défini entre la tangente à la courbe G et la direction du tube-, est faible, de sorte que les efforts de montage sont réduits par rapport à ceux qui devraient être développés pour un joint torique adapté aux dimensions de la gorge 16, les risques de destruction étant en outre supprimés en raison du dégagement suffisant pour éviter tout pincement par la bague de serrage 21 lorsque le chapeau ou écrou 22, déjà en place sur la couronne 14 avant l'introduction du tube T dans le corps, est serré sur ladite couronne.

A la facilité de mise en place du tube T dans le dispositif d'assemblage contribue également le fait que le joint 25 ne se déforme pas par vrillage lors de la présentation du tube, de sorte que le montage par l'utilisateur, -qui dispose d'un raccord, d'un adaptateur, ou d'un autre dispositif d'assemblage dans lequel le joint est en place dans sa gorge de fabrication même-, peut être réalisé avec un gain de temps important.

**Revendications**

1. Joint d'étanchéité pour dispositif d'assemblage de canalisations en métal ou en matière plastique du type comprenant un corps recevant le joint, une bague fendue de serrage d'une canalisation et un chapeau ou écrou propre à coopérer avec le corps, caractérisé en ce que ledit joint en matériau élastomère, notamment en matière caoutchoutique comme du caoutchouc-nitrile, du caoutchouc éthylène-propylène, du caoutchouc fluorocarboné, et.... est du type des joints circulaires à section oblongue dont la section droite est une courbe ovale (C) s'inscrivant entre deux ellipses ayant pour grands axes $a_1$ et $a_2$ et pour petits axes $b_1$ et $b_2$, les ellipses étant coaxiales et les valeurs $a_1$, $a_2$, $b_1$ et $b_2$ satisfaisant aux relations :

(I) $\quad \frac{a_1}{b_1} = 2,3$

(II) $\quad \frac{a_2}{b_2} = 1,3$

(III) $\quad \frac{a_2}{a_1} = 1,2$

2. Joint selon la revendication 1, caractérisé en ce qu'il est symétrique par rapport à un axe s'étendant suivant la direction de la corde de plus petite longueur (b) de la courbe ovale (C) définissant sa section droite.

3. Joint selon la revendication 1, caractérisé en ce qu'il présente deux axes de symétrie orthogonaux dirigés parallèlement aux cordes de plus grande et de plus petite longueur (a ; b), respectivement, de la courbe ovale (C) définissant sa section droite.

FIG.2

FIG.1

FIG.3a

FIG.3b

FIG.3c

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-1494323 (LOTIGIE)<br>* figures 1, 2 *<br>--- | 1 | F16L19/08 |
| A | US-A-3425452 (SHAW)<br>* figures 2, 3 *<br>--- | 1 | |
| A | US-A-3140107 (HYNES)<br>* figure 4 *<br>--- | 1 | |
| A | DE-A-1475735 (ANGER&CO)<br>* figure 2 *<br>----- | 2, 3 | |

**DOMAINES TECHNIQUES RECHERCHES (Int. Cl.5 )**

F16L

Le présent rapport a été établi pour toutes les revendications

| Lieu de la recherche | Date d'achèvement de la recherche | Examinateur |
|---|---|---|
| BERLIN | 09 AVRIL 1990 | SCHLABBACH M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)